# FASCICULE DE BREVET EUROPEEN

(11) **EP 3 743 660 B1**
(45) Date de publication et mention de la délivrance du brevet: **12.03.2025**
(21) Numéro de dépôt: 19704366.4
(22) Date de dépôt: 21.01.2019
(51) Int. Cl.: F24S 30/20

(54) **STRUCTURE DE CADRES ARTICULES DÉPLOYABLES SUR DES RAILS**
STRUKTUR VON AUF SCHIENEN EINSETZBAREN GELENKIGEN RAHMEN
STRUCTURE OF ARTICULATED FRAMES THAT ARE DEPLOYABLE ON RAILS

(30) Priorité: 26.01.2018 FR 1850647
(43) Date de publication de la demande: 02.12.2020
(73) Titulaire: Akuo Innovations, 75008 Paris (FR)
(72) Inventeur: LAPORTE, Frédéric, 75008 PARIS (FR); ROMAN, Pierre, 75008 PARIS (FR)
(74) Mandataire: Plasseraud IP
(86) Numéro de dépôt international: PCT/FR2019/050124
(87) Numéro de publication internationale: WO 2019/145630

(56) Documents cités:
- EP-A1- 2 341 199
- WO-A1-2017/147634
- WO-A1-2018/000887
- CH-A1- 706 582
- CH-A1- 711 174
- US-A- 4 312 328

## Description

La présente invention concerne une structure constituée de plusieurs cadres, chaque cadre étant formé par une pluralité de montants dont un montant supérieur et un montant inférieur, les cadres étant articulés entre eux deux à deux par leurs montants supérieurs ou leurs montants inférieurs pour former une structure en accordéon déployable et repliable.

Dans diverses applications industrielles, on utilise de telles structures qui sont aptes à être repliées durant leur transport afin d'occuper un minimum de place (les cadres sont alors empilés les uns contre les autres), et dépliées une fois arrivées sur site. Cela est le cas par exemple dans le domaine des énergies renouvelables, les panneaux solaires étant fixés sur les cadres. Le déploiement de la structure sur site permet d'exposer tous les panneaux au soleil, afin d'optimiser la production d'électricité.

Le déploiement de la structure peut s'effectuer à l'aide de rails, qui constituent un support permettant un déploiement quel que soit le terrain. Ainsi, ce sont les bords inférieurs des cadres qui se déplacent sur les rails.

Un exemple d'une telle structure est donné par le document EP 2 378 565, où les bords inférieurs des cadres présentent des excroissances qui coulisse dans des rails démontables.

On cherche cependant à améliorer les mécanismes de déploiement de structures par rapport à des rails.

WO 2017/147634 décrit un système photovoltaïque mobile comprenant des panneaux articulés.

EP 2 341 199 concerne un abri mobile de piscine comprenant des panneaux articulés pour être placés dans une direction verticale.

L'invention vise à proposer une structure qui permette un déploiement sur des rails plus aisé.

Ce but est atteint grâce au fait que chaque couple de montants inférieurs articulés est muni d'au moins un mécanisme de déplacement qui comprend un dispositif de translation et un dispositif de guidage, le dispositif de translation étant apte à translater les montants inférieurs sur un rail lors du passage entre la position déployée et la position repliée de la structure, et le dispositif de guidage étant apte à guider les montants inférieurs le long du rail lors de passage de la structure entre la position déployée et la position repliée, dans laquelle le dispositif de guidage (52) est monté sur l'un et/ou l'autre des montants inférieures (22) adjacents.

Grâce à ces dispositions, la structure est apte à se déplacer de façon plus aisée sur un rail avec une grande variété de géométries, puisqu'il n'est pas nécessaire que le rail présente de dispositif de guidage. En effet, les dispositifs de guidage sont portés par les cadres. En outre le dispositif de déplacement se déplace sur le rail, c'est-à-dire repose sur la partie supérieure du rail. Le positionnement et la coopération de la structure avec les rails sont ainsi rapides et aisés.

Avantageusement, le dispositif de translation comporte une roue apte à rouler sur la surface supérieure du rail.

Ainsi, le déploiement et repliement de la structure est facilitée.

Avantageusement, le dispositif de translation comporte un patin apte à glisser sur la surface supérieure du rail.

Avantageusement, le dispositif de guidage comporte au moins un guide apte à se déplacer le long et en regard d'un bord latéral du rail.

Avantageusement, chaque couple de montants inférieurs articulés est muni d'au moins deux mécanismes de déplacement.

Ainsi, lorsque deux rails parallèles sont présents, la structure est apte à se déplacer sur deux rails, et est donc plus stable dans son déplacement.

Avantageusement, le montant inférieur de chacun des cadres d'extrémité de la structure est muni d'au moins un mécanisme de déplacement.

Ainsi, les cadres d'extrémités peuvent contribuer à guider la structure dans son déplacement.

L'invention concerne également un ensemble constitué une structure selon l'invention et d'au moins un panneau solaire porté par un des cadres.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en perspective d'une structure avec un élément de translation selon un premier mode de réalisation de l'invention, reposant sur des rails ;
- la figure 2 est une vue en perspective et agrandie de l'élément de translation de la figure 1 ;
- la figure 3 est une vue de côté de l'élément de translation de la figure 2.

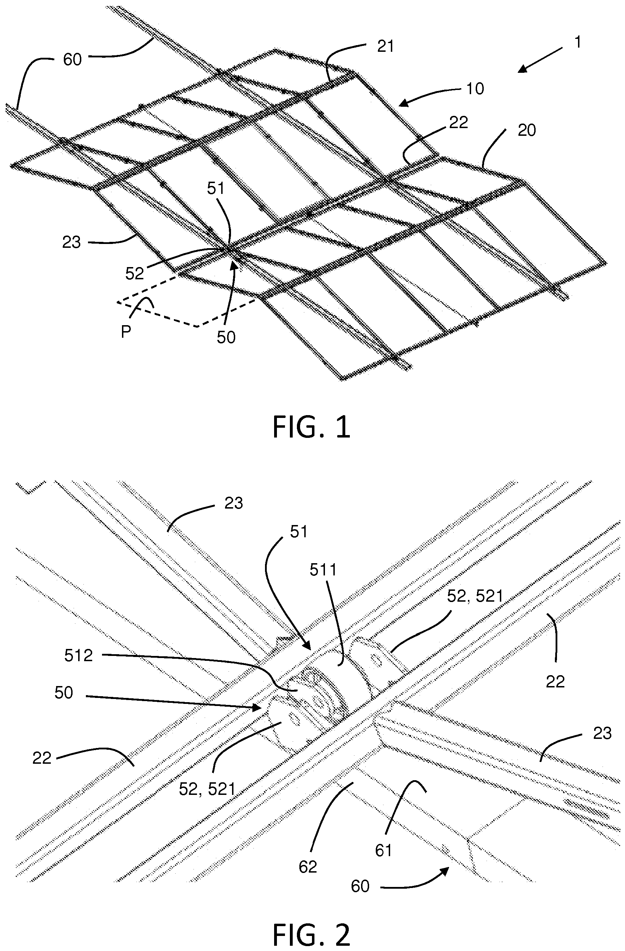

La figure 1 montre une structure 1 constituée de plusieurs cadres 10. Chaque cadre 10 s'étend dans un plan principal P, et est formé d'un ensemble de montants 20. Le plan P est ainsi le plan dans lequel s'étendent les montants 20. Cet ensemble comprend un montant supérieur 21, un montant inférieur 22, et au moins deux montants intermédiaires 23 qui relient chacun le montant supérieur 21 et le montant inférieur 22. La structure 1 comprend un ou plusieurs cadres 10 centraux, et deux cadres d'extrémité. Chaque cadre 10 central est articulé par son montant supérieur 21 au montant supérieur d'un premier cadre adjacent, et par son montant inférieur 22 au montant inférieur d'un second cadre adjacent. Chaque cadre 10 d'extrémité est articulé à un seul cadre 10 central, soit par son montant supérieur 21, soit par son montant inférieur 22.

Ainsi, la structure 1 est une structure en accordéon apte à se déployer (position déployée) et se replier (position repliée) par pivotement des cadres 10 autour des articulations entre les montants supérieurs 21 et des articulations entre les montants inférieurs 22.

Dans la position repliée, les plans principaux P des cadres 10 sont tous parallèles, par exemple verticaux.

Dans la position déployée, représentée en figure 1, les cadres 10 se situent tous sensiblement dans un même plan, par exemple un plan horizontal, c'est-à-dire que deux cadres 10 adjacent font entre eux un angle proche de 180°.

Ainsi, le déploiement et repliement de la structure 1 est plus stable.

Avantageusement, la structure 1 comprend un nombre pair de cadres 10 centraux, et chaque cadre 10 d'extrémité est articulé au montant supérieur 21 du cadre 10 central qui lui est adjacent par son montants supérieur 21, de telle sorte que le montant inférieur 22 du cadre 10 d'extrémité est destiné à reposer sur des rails.

Dans la description qui suit on se placera dans cette configuration.

Le cadre 10 peut avoir toute forme souhaitée. Par exemple le cadre 10 est rectangulaire, les montants 20 du cadre 10 formant un ou plusieurs rectangles adjacents au sein de ce cadre 10.

Par exemple, comme représenté en figure 1, chaque cadre 10 de la structure 1 est constitué d'un montant supérieur 21, d'un montant inférieur 22, et de six montants intermédiaires 23 parallèles. Ces montants 20 définissent cinq rectangles identiques, chacun de ces rectangles étant délimité par un montant supérieur 21, un montant inférieur 22, et deux montants intermédiaires 23.

Chacun de ces rectangles est apte à recevoir un panneau, par exemple un panneau solaire (non représenté).

Deux montants supérieurs 21 adjacents sont articulés par une liaison pivot.

Deux montants inférieurs 22 adjacents sont également articulés par une liaison pivot.

Ces liaisons pivot sont par exemple formés d'une pluralité d'excroissances portés pour partie par un des montants (21, 22), pour l'autre partie par le montant (21, 22) adjacent, ces excroissances étant reliées par une tige ou un ensemble de tiges alignées sur l'axe de pivotement des liaisons pivot.

Chaque couple de montants inférieurs 22 articulés entre eux est muni d'au moins un mécanisme de déplacement 50 qui comprend un dispositif de translation 51 et un dispositif de guidage 52.

Le dispositif de translation 51 est apte à translater ces montants inférieurs 22 sur un rail 60, entre la position déployée et la position repliée de la structure 1.

Cette translation sur le rail 60 s'effectue sur la surface supérieure 61 du rail 60.

Le dispositif de translation 51 est monté sur l'un ou l'autre des montants inférieurs 22 adjacents.

Par exemple, le dispositif de translation 51 comporte une roue 511 apte à rouler sur la surface supérieure 61 du rail 60. Ce mode de réalisation est représenté en figures 1, 2, et 3. La roue 511 est montée libre en rotation sur une ou des excroissances 512 portées par un des montants inférieurs 22.

Alternativement, le dispositif de translation 51 comporte un patin apte à glisser sur la surface supérieure 61 du rail 60.

Le dispositif de guidage 52 est apte à guider les montants inférieurs 22 le long du rail 60 lors du déploiement ou repliement de la structure 1, c'est-à-dire quelle que soit la position des cadres 10 par rapport au rail 60 lorsque les montants inférieurs 22 se translatent sur le rail 60.

Le dispositif de guidage 52 est monté sur l'un et/ou l'autre des montants inférieurs 22 adjacents.

Par exemple, le dispositif de guidage 52 comporte au moins un guide 521 apte à se déplacer le long et en regard d'un bord latéral 62 du rail 60.

D'une manière générale, s'il est prévu que la structure 1 se déplace sur plusieurs rails 60, par exemple sur deux rails 60, chaque couple de montants inférieurs 22 articulés est muni d'un mécanisme de déplacement 50 pour chaque rail 60.

Ainsi, le dispositif de guidage 52 comporte au moins un guide 521 par rail 60. Avantageusement, le dispositif de guidage 52 comporte au moins deux guides 521 par rail 60, le rail 60 étant situé entre ces deux guides 521. Ainsi, le guidage de la structure 1 sur les rails 60 est plus efficace.

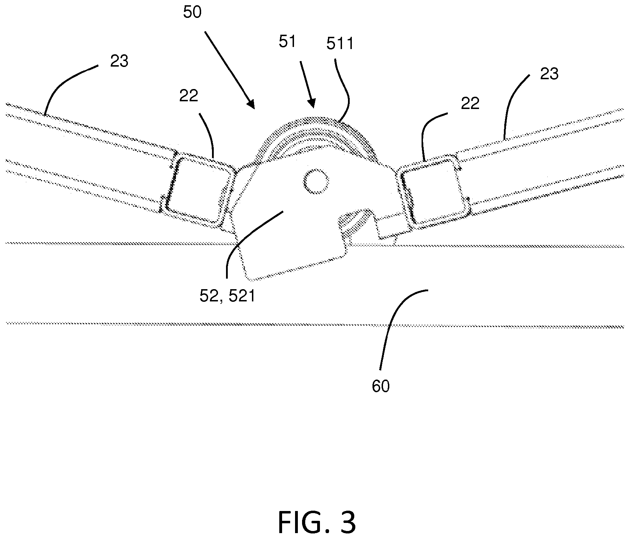

Par exemple, comme visible en figure 3, le dispositif de guidage 52 comporte deux plaques 521 montées sur celui des montants inférieurs 21 ne portant pas le dispositif de translation 51. Ces plaques 521 sont situées chacune en regard d'un des bords latéraux 62. Ces plaques 521 sont montées de telle sorte qu'une partie du rail 60 est toujours prise en sandwich entre une portion des deux plaques 521 quelle que soit la position de la structure 1 entre sa position repliée et sa position dépliée. Ainsi le guidage est toujours effectif.

Avantageusement, chaque mécanisme de déplacement 50 constitue une des liaisons pivot (ou la liaison pivot s'il n'y en a qu'une) entre les deux montants inférieurs 22 adjacents.

Ainsi, la fabrication et l'assemblage de la structure 1 est facilitée.

Par exemple, le dispositif de translation 51 est porté par le premier des montants inférieurs 22, le dispositif de guidage 52 est porté par l'autre montant inférieur 22 articulé au premier des montants inférieurs 22, et une tige passe au travers de trous dans le dispositif de translation 51 et le dispositif de guidage 52, cette tige formant l'axe de pivotement de la liaison pivot entre ces deux cadres 10 adjacents.

Par exemple, comme représenté en figure 2, les trous sont situés dans les plaques 521, dans les excroissances 512, et la tige (non-représentée) passe par ces trous et par le centre de la roue 511 de telle sorte que l'axe de pivotement de l'articulation est confondu avec l'axe de rotation de la roue 511.

Avantageusement, le montant inférieur 21 de chacun des cadres 10 d'extrémité de la structure 1 est muni d'au moins un mécanisme de déplacement 50. Ces mécanismes de déplacement 50 sont positionnés sur le ou les rails 60 lorsque la structure 1 passe entre sa position repliée et sa position déployée.

Ainsi, les cadres d'extrémité 10 contribuent au guidage de la structure 1 sur le ou les rails 60.

Le fait que le mécanisme de déplacement 50 se situe entièrement sur la structure 1, et non pas sur les rails 60, permet à la structure 1 de s'adapter aisément à une variété de rails 60.

En outre, le fait que la translation des montants inférieurs 22 le long des rails 60 se fasse sur les rails 60, donc sur la surface supérieure 61 de chaque rail 60, permet un déploiement et repliement plus aisé et plus rapide de la structure 1. En effet, une fois les rails 60 en place, il suffit de positionner la structure 61 de telle sorte que le mécanisme de déplacement 50 soit situé sur les rails 60 afin que la structure 1 puisse être dépliée. La translation des montants inférieurs 22 s'effectue quelle que soit la géométrie du rail 60 et de sa surface supérieure 61.

## Revendications

1. Structure (1) constituée de plusieurs cadres (10), chaque cadre (10) étant formé par une pluralité de montants (20) dont un montant supérieur (21) et un montant inférieur (22), lesdits cadres (10) étant articulés entre eux deux à deux par leurs montants supérieurs (21) ou leurs montants inférieurs (22) pour former une structure en accordéon déployable et repliable, dans laquelle chaque couple de montants inférieurs (22) articulés est muni d'au moins un mécanisme de déplacement (50) qui comprend un dispositif de translation (51) et un dispositif de guidage (52), ledit dispositif de translation (51) étant apte à translater lesdits montants inférieurs (22) sur un rail (60) lors du passage entre la position déployée et la position repliée de ladite structure (1), et ledit dispositif de guidage (52) étant apte à guider lesdits montants inférieurs (22) le long dudit rail (60) lors de passage de ladite structure (1) entre la position déployée et la position repliée, ladite structure (1) étant **caractérisé en ce que** le dispositif de guidage (52) est monté sur l'un et/ou l'autre des montants inférieurs (22) adjacents.

2. Structure (1) selon la revendication 1 **caractérisée en ce que** ledit dispositif de translation (51) comporte une roue (511) apte à rouler sur la surface supérieure (61) dudit rail (60).

3. Structure (1) selon la revendication 1 **caractérisée en ce que** ledit dispositif de translation (51) comporte un patin apte à glisser sur la surface supérieure (61) dudit rail (60).

4. Structure (1) selon l'une quelconque des revendications 1 à 3 **caractérisée en ce que** ledit dispositif de guidage (52) comporte au moins un guide (521) apte à se déplacer le long et en regard d'un bord latéral (62) dudit rail (60).

5. Structure (1) selon l'une quelconque des revendications 1 à 4 **caractérisée en ce que** chaque couple de montants inférieurs (22) articulés est muni d'au moins deux mécanismes de déplacement (50).

6. Structure (1) selon l'une quelconque des revendications 1 à 5 **caractérisée en ce que** le montant inférieur de chacun des cadres (10) d'extrémité de la structure (1) est muni d'au moins un mécanisme de déplacement (50).

7. Ensemble constitué d'une structure (1) selon l'une quelconque des revendications précédentes, et d'au moins un panneau solaire porté par un desdits cadres (10).

## Patentansprüche

1. Struktur (1), die aus mehreren Rahmen (10) besteht, wobei jeder Rahmen (10) durch eine Vielzahl von Stützen (20) gebildet wird, darunter eine obere Stütze (21) und eine untere Stütze (22), wobei die Rahmen (10) paarweise durch ihre oberen Stützen (21) oder ihre unteren Stützen (22) gelenkig miteinander verbunden sind, um eine aufklappbare und einklappbare Akkordeonstruktur zu bilden, wobei jedes Paar von gelenkig verbundenen unteren Stützen (22) mit wenigstens einem Verlagerungsmechanismus (50) versehen ist, der eine Verschiebevorrichtung (51) und eine Führungsvorrichtung (52) umfasst, wobei die Verschiebevorrichtung (51) dazu geeignet ist, die unteren Stützen (22) auf einer Schiene (60) zu verschieben, wenn die Struktur (1) zwischen der aufgeklappten und der eingeklappten Position wechselt, und die Führungsvorrichtung (52) dazu geeignet ist, die unteren Stützen (22) entlang der Schiene (60) zu führen, wenn die Struktur (1) zwischen der aufgeklappten und der eingeklappten Position wechselt, wobei die Struktur (1) **dadurch gekennzeichnet ist, dass** die Führungsvorrichtung (52) an einer und/oder der anderen der benachbarten unteren Stützen (22) angebracht ist.

2. Struktur (1) nach Anspruch 1, **dadurch gekennzeichnet, dass** die Verschiebevorrichtung (51) ein Rad (511) aufweist, das dazu geeignet ist, auf der oberen Fläche (61) der Schiene (60) zu rollen.

3. Struktur (1) nach Anspruch 1, **dadurch gekennzeichnet, dass** die Verschiebevorrichtung (51) einen Gleitschuh umfasst, der dazu geeignet ist, auf der oberen Fläche (61) der Schiene (60) zu gleiten.

4. Struktur (1) nach einem der Ansprüche 1 bis 3, **dadurch gekennzeichnet, dass** die Führungsvorrichtung (52) wenigstens eine Führung (521) umfasst, die dazu geeignet ist, sich entlang und gegenüber einer Seitenkante (62) der Schiene (60) zu verlagern.

5. Struktur (1) nach einem der Ansprüche 1 bis 4, **dadurch gekennzeichnet, dass** jedes Paar gelenkig verbundener unterer Stützen (22) mit wenigstens zwei Verlagerungsmechanismen (50) versehen ist.

6. Struktur (1) nach einem der Ansprüche 1 bis 5, **dadurch gekennzeichnet, dass** die untere Stütze jedes der Endrahmen (10) der Struktur (1) mit wenigstens einem Verlagerungsmechanismus (50) versehen ist.

7. Baugruppe bestehend aus einer Struktur (1) nach einem der vorhergehenden Ansprüche und wenigstens einem Solarmodul, das von einem der Rahmen (10) getragen wird.

## Claims

1. A structure (1) formed of several frames (10), where each frame (10) is formed by a plurality of stiles (20) including one upper stile (21) and one lower stile (22), and where said frames (10) are hinged to each other pairwise by the upper stiles (21) thereof or the lower stiles (22) thereof in order to form a deployable and foldable accordion structure, said structure (1) in which each pair of hinged lower stiles (22) is provided with at least one displacement mechanism (50) which comprises a translation device (51) and a guiding device (52), where said translation device (51) can translate said lower stiles (22) on a track (60) during movement between the deployed position and the folded position of said structure (1), and where the guiding device (52) can guide said lower stiles (22) along said track (60) during passage of said structure (1) between the deployed position and the folded position, said structure being **characterized in that** the guiding device (52) is mounted on one or the other of the adjacent lower stiles (22).

2. The structure (1) according to claim 1 **characterized in that** said translation device (51) comprises a wheel (511) rollable on the upper surface (61) of the track (60).

3. The structure (1) according to claim 1 **characterized in that** said translation device (51) comprises a slider slidable on the upper surface (61) of said track (60).

4. The structure (1) according to and one of claims 1 to 3 **characterized in that** said guiding device (52) comprises at least one guide (521) displaceable along and facing a lateral edge (62) of the track (60).

5. The structure (1) according to and one of claims 1 to 4 **characterized in that** each pair of hinged lower stiles (22) is provided with at least two displacement mechanisms (50).

6. The structure (1) according to and one of claims 1 to 5 **characterized in that** the lower stile of each of the end frames (10) of the structure (1) is provided with at least one displacement mechanism (50).

7. An assembly formed of a structure (1) according to any one of the preceding claims and at least one solar panel carried by one of said frames (10).
